# EUROPÄISCHE PATENTSCHRIFT

(11) **EP 1 323 776 B1**
(45) Veröffentlichungstag und Bekanntmachung des Hinweises auf die Patenterteilung: **01.03.2006**
(21) Anmeldenummer: 02027650.7
(22) Anmeldetag: 12.12.2002
(51) Int. Cl.: C08L 21/00

(54) **Verwendung von plastifizierten Novolaken als Zusatz zu Kautschukmischungen**
Use of plastified novolak resins as additive for rubber mixtures
Utilisation de résines novolak plastifiées comme additif dans les mélanges du caoutchouc

(30) Priorität: 20.12.2001 DE 10162771
(43) Veröffentlichungstag der Anmeldung: 02.07.2003
(73) Patentinhaber: Cytec Surface Specialties Germany GmbH & Co. KG, 65203 Wiesbaden (DE)
(72) Erfinder: Burkhart, Thomas, Dr., 56410 Montabaur (DE); Wallenwein, Siegfried, 64572 Büttelborn (DE)
(74) Vertreter: Deckers, Hellmuth Alexander

(56) Entgegenhaltungen:
- EP-A- 0 385 033
- EP-A- 0 440 036
- EP-A- 0 563 710
- EP-A- 0 643 117
- GB-A- 958 425
- GB-A- 1 244 208
- GB-A- 1 312 815
- US-A- 3 023 179
- US-A- 3 370 023
- US-A- 4 421 891
- US-A- 5 096 996
- US-A- 5 426 152
- PATENT ABSTRACTS OF JAPAN vol. 015, no. 072 (C-0808), 20. Februar 1991 (1991-02-20) & JP 02 296844 A (TOYO TIRE & RUBBER CO LTD), 7. Dezember 1990 (1990-12-07)
- PATENT ABSTRACTS OF JAPAN vol. 017, no. 442 (C-1097), 16. August 1993 (1993-08-16) & JP 05 098081 A (YOKOHAMA RUBBER CO LTD:THE), 20. April 1993 (1993-04-20)

## Beschreibung

Die Erfindung betrifft die Verwendung von plastifizierten Novolaken als Zusatz zu Kautschukmischungen, die zu höherem Weiterreißwiderstand sowie niedrigem Druckverformungsrest in den daraus hergestellten Vulkanisaten führen.

Zur Erreichung einer höheren Lebensdauer bzw. Haltbarkeit von Gummiartikeln aus Natur- oder Synthesekautschuk ist es erwünscht, neben den geforderten mechanischen Kenngrößen wie z.B. Shore-Härte, Reißdehnung, Reißfestigkeit und Spannungswerten, einen möglichst hohen Weiterreißwiderstand sowie einen niedrigen Druckverformungsrest einzustellen.

Kautschukvulkanisate sind beispielsweise Fahrzeugreifen (z. B. für PKW oder LKW), aber auch technische Gummiartikel wie Keilriemen, Schläuche, Zahnriemen, Membranen, Förderbänder, Trägermatrizes für Schleifkörper und Reibbeläge etc.

Aus dem Stand der Technik sind einige Lösungsansätze zur Erzielung einer auf den jeweiligen Verwendungszweck optimal abgestimmten Kombination der obengenannten Eigenschaften von Kautschukvulkanisaten bekannt. So werden unter anderem folgende Systeme beschrieben:

Zusatz zu Kautschukmischungen von Phenolharzen, die in Gegenwart von ungesättigten Verbindungen hergestellt werden, zur Verbesserung der Haftung auf den Festigkeitsträgern (US 5,426,152 und EP 0 440 036 A1), Verbesserung der Klebrigkeit von unvulkanisierten Kautschukstreifen, die beim Reifenaufbau als Bänder über die Karkasse gelegt werden, durch Zumischen von nichtreaktivem Phenolharz und gegebenenfalls Kolophonium-Öl (EP 0 643 117 A1), Kautschukmischungen von hohem Speichermodul G' bei tiefen Temperaturen und niedrigem Speichermodul G" bei höheren Temperaturen durch Zusatz von Phenolharzen und gegebenenfalls Kolophonium oder Terpenen oder Tallharz (EP 0 563 710 A1), Zusatz von terpenmodifizierten Phenolharzen zu Kautschukmischungen zur Verringerung der Sprödigkeit (US 5,096,996), besonders harte Kautschuk-Zusammensetzungen für PKW-Reifen, insbesondere als Füllstoff im Reifenwulst, die ölmodifizierte Novolake enthalten (EP 0 385 033, US 4, 421,891), Gummimischungen mit verbessertem dynamischem Modul, die einen Phenol-Novolak und Melaminderivate enthalten (JP 02-296 844 A, JP 05-098 081 A), wobei im letzteren Dokument zusätzlich die günstige Auswirkung eines weiteren Zusatzes von Cardanol (3-Pentadecylphenol) auf die Brucheigenschaften erwähnt wird, Montage- und Dichtbänder für Front- und Heckscheiben in Automobilen, die aus mit Phenolharzen und hydriertem Kolophoniumester modifizierten Kautschukzubereitungen hergestellt werden (GB 1,312,815 und GB 1,244,208), Verbesserung der Verarbeitbarkeit von Butadienkautschuk durch Verkneten mit nicht heißhärtenden Phenol-Formaldehyd-Harzen und Abietinsäureharzen (GB 958,425), vernetzte Gummimaterialien mit verbesserter Dehnung, Zugfestigkeit, Flexibilität, Härte, Modul und Abriebfestigkeit durch Zusatz eines Harzes aus aromatischen Kohlenwasserstoffen und Aldehyden, wobei auch Terpenphenol-Harze zugesetzt werden (US 3,370,023), und feste Gummimischungen mit erhöhter Klebrigkeit durch Zusatz von Mischungen aus Phenol-Formaldehyd-Harzen und Estern eines modifizierten Kolophoniums (US 3,023,179); wobei in keinem dieser Dokumente ein Einfluß auf die Weiterreißfestigkeit oder den Druckverformungsrest genannt oder ein Hinweis darauf gegeben wird;

Einsatz von Kurzfasern als Verstärkungsmittel (Short Polyester Fiber Reinforced Natural Rubber Composites; Senapati, A. K.; Kutty, S. K. N.; Pradhan, B.; Nando, G. B. in Int. J. Polym. Mater. 12(3), S. 203 bis 224, 1989); mit Kautschuk modifizierter Polyäthylenschaum für Sportschuhsohlen (WO-A 88/08860); Herstellung von Mischungen aus Naturkautschuk und Ligninen (Compounding of Natural Rubber with Lignins; Kumaran, M. G. and De, S. K. in Kautschuk + Gummi Kunststoffe, 30. Jahrgang, Nr. 12, S. 911 bis 915); Vergleich von Kautschukverscärkung mittels unterschiedlicher oberflächenmodifizierter Kieselsäuren (Comparison of Rubber Reinforcement Using Various Surface-Modified Precipitated Silicas; Thammathadamikul, V. O.; O'Haver; Harwell, J. H.; Osuwan, S.; Na-Ranong, N. and Waddell, W. H., J. Appl. Polym. Sci., 59(11), 1741bis 1750 (1996)); und Verwendung eines Zweikomponenten-Beschleunigungssystem für die Kautschukvulkanisation (A New Binary Accelaration System for Rubber Vulcanisation, Kuriakose, A. P.; Mathew, G., Indian J. Technol., 26(7), 344 bis 347 (1988)).

Bei Einsatz von Kurzfasern treten sehr starke Anisotropie-Effekte auf. So ist die Weiterreißfähigkeit und der Druckverformungsrest parallel zur bevorzugten Ausrichtung der Fasern höher als in dazu senkrechter Richtung. Daneben ist zur Herstellung solcher Kurzfasern enthaltenden Kautschukvulkanisaten eine sehr aufwendige Mischtechnik notwendig. Aus der Literatur ist auch bekannt, daß das Falten und Durchlaufen der Kautschukfelle durch den engen Walzenspalt immer in derselben Richtung und in einer zuvor zu ermittelnden optimalen Anzahl der Walzendurchgänge erfolgen muß. Solche komplexe Mischvorgänge erfordern aufwendige Kontrollen bei der Übertragung vom Labor in die Produktion. Oft werden jedoch in der Gummündustrie Innenmischer eingesetzt, die eine gewünschte Orientierung der Fasern nicht sehr wahrscheinlich erscheinen lassen. Ferner steigt mit steigender Faserkonzentration zwangsläufig die Einmischzeit, wodurch sich die Mischkapazität drastisch erniedrigt. Außerdem wird die sog. "Scorch Time" deutlich kürzer, was wiederum gleichbedeutend mit einer Verschlechterung der Verarbeitungssicherheit der Mischungen ist.

Reißfestigkeit und Reißdehnung von fasergefüllten Kautschukvulkanisaten verändern sich bekanntlich gegenläufig. So werden im Vergleich mit der Ausgangsmischung (ohne Faseranteil) erst bei Faseranteilen von 20 phr ("parts per hundred resin"; 20 g auf 100 g des Kautschuks) und höher vergleichbare Reißfestigkeiten parallel zur Ausrichtung der Fasern erreicht, wohingegen sich akzeptable Reißdehnungen von 100 bis 300 % nur bei transversaler (senkrechter) Ausrichtung ergeben. So fällt z.B. die Reißdehnung bei Zugabe von 10 phr Fasern in paralleler Ausrichtung von 650 % auf 30 %. Der Weiterreißwiderstand kann zwar durch unterschiedliche Dosierungen (10 bis 40 phr) der Fasern von 23 N/mm auf bis zu 116 N/mm bei paralleler Ausrichtung und von 25 N/mm auf 97 N/mm bei transversaler Ausrichtung erhöht werden, aber erkauft wird dies mit einem bereits wie oben geschilderten dramatischen Rückgang der Reißdehnung von 650 % auf 30 %. Ferner erfolgt ein nicht weniger dramatischer Anstieg der Ausgangshärte von 41 auf 92 Shore A.

Die mechanischen Eigenschaften von mit Kurzfasern verstärkten Naturkautschukmischungen hängen somit von der Faserausrichtung, der Faserkonzentration und dem Verhältnis von Länge und Durchmesser der eingesetzten Fasern ab.

Kozma et al. beschreibt in WO-A 88/08860 einen Kautschuk modifizierten Polyäthylenschaum für Sportschuhsohlen. Das im Schaum verwendete Polyäthylen wird mit EPDM modifiziert und mit Peroxiden vernetzt. Die Modifikation bewirkt im Vergleich zu einem nicht modifizierten feinen EPDM-Schaummaterial unter anderem eine Verbesserung des Druckverformungsrestes.

Weitere Studien (Kumaran und De) beschäftigten sich mit der Einarbeitung von Lignin, einem Nebenprodukt der Papierindustrie, in Kautschukmischungen, insbesondere Naturkautschukmischungen. Solche Kautschukmischungen bzw. die daraus hergestellten Vulkanisate weisen eine drastische Abnahme der Weiterreißfestigkeit und eine Zunahme des Druckverformungsrestes auf.

In dem oben erwähnten Artikel von O'Haver et al. "Vergleich von Kautschukverstärkung mittels unterschiedlicher oberflächenmodifizierter Kieselsäuren" untersuchen die Autoren den Einfluß von modifizierten Kieselsäuren auf die Vulkanisationscharakteristik sowie auf die mechanischen Prüfwerte einer Naturkautschukmischung bzw. den daraus hergestellten Vulkanisaten. Die beschriebene Modifizierung der Kieselsäuren mittels einer in-situ-Polymerisation mit Styrol/Isopren bzw. Styrol/Butadien als Co-Monomere ist jedoch sehr aufwendig. So gliedert sich die in-situ-Polymerisation in 4 Reaktionsschritte:

Adsorption der oberflächenaktiven Substanz (Hexadecyltrimethylammoniumbromid) an den Kieselsäurepartikeln, Adsorption der Monomere über Lösungsvorgang, Polymerisation der Monomeren, Entfernen der oberflächenaktiven Substanz durch Auswaschen. Diesem sehr zeitaufwendigen und kostspieligen Vorgang stehen - unter Verschlechterung der Reißdehnung - verbesserte Weiterreißwiderstände und Druckverformungsreste gegenüber.

Den Autoren Mathew und Kuriakose gelang es über ein Zweikomponenten-Beschleunigersystem [1-Phenyl-2,4-dithiobiuret/TMTD (Tetramethylthiuramdisulfid)], die Reißfestigkeit und den Weiterreißwiderstand zu verbessern. Mechanische Ausprüfungen zeigten aber auch, daß im Vergleich zu den Standard-Vulkanisationsbedingungen Rückprallelastizität und Druckverformungsrest unverändert blieben.

Aus der EP-A 0 362 727 sind modifizierte Novolake bekannt, die als Bestandteile Terpene und ungesättigte Carbonsäuren und/oder Derivate dieser Verbindungen enthalten, wobei das Massenverhältnis zwischen den Terpenen und den ungesättigten Carbonsäuren 98,2:2,5 bis 2,5:98,5, und das Verhältnis zwischen der Masse der phenolischen Komponente und der Summe der Massen der Modifizierungsmittel 95:5 bis 5:95, bevorzugt 10:90 bis 90:10 beträgt. Ein Zusatz dieser modifizierten Novolake zu Kautschukmischungen bewirkt einen Anstieg der Härte und der Spannungswerte. Über die Wirkung auf den Weiterreißwiderstand und den Druckverformungsrest wird keine Aussage gemacht.

Überraschenderweise wurde nun gefunden, daß man den gewünschten hohen Weiterreißwiderstand bei gleichzeitig niedrigem Druckverformungsrest in vulkanisierbaren Kautschukmischungen bzw. daraus hergestellten Vulkanisaten durch Einmischen von bestimmten plastifizierten Novolaken sowie der zur Härtung derselben üblichen Härter wie z.B. Heyxamethylentetramin (HMT) oder Hexamethoxymethylmelamin (HMMM) erhalten kann.

Gegenstand der vorliegenden Erfindung ist daher die Verwendung von mit terpenartigen olefinisch ungesättigten Naturstoffen C wie Kolophonium oder Kolophoniumderivaten plastifizierten Novolaken **ABC** als Modifizierharz für Kautschukmischungen, wobei das Verhältnis der Stoffmenge des Phenols bzw. Phenolderivats **B** und der Stoffmenge des Naturstoffs C in dem modifizierten Novolak zwischen 1:6 bis 6:1 beträgt, und der modifizierte Novolak eine Schmelztemperatur von über 90 °C aufweist.

Die plastifizierten Novolake werden in Analogie zu den bekannten Methoden hergestellt, wie sie z.B. in der DE-C 22 54 379 beschrieben sind.

Für die Herstellung der erfindungsgemäß verwendeten plastifizierten Novolake **ABC** kommen prinzipiell alle phenolischen Verbindungen **B** in Frage, die mindestens 1 reaktives Wasserstoffatom am aromatischen Kern besitzen und in ihrer Reaktivität mit Aldehyden mindestens monofunktionell sind. Hierzu zählen z.B. einkernige oder mehrkernige phenolische Verbindungen, die in ihrer Reaktivität mit Aldehyden wie beispielsweise Formaldehyd monofunktionell, difunktionell, trifunktionell oder auch höherfunktionell sein können. So können die nachfolgend genannten Verbindungen z.B. einzeln, zu mehreren nacheinander oder als Gemische eingesetzt werden: Phenol selbst, die verschiedenen Kresol- und Xylenol-Isomeren, die Isomeren des Äthylphenols, des Propyl- bzw. Isopropylphenols sowie p- bzw. o-substituierte Alkylphenole mit bis zu 18, insbesondere bis zu 15, C-Atomen in der Seitenkette. Es können auch ungesättigte Phenole verwendet werden, wie z.B. o- oder p-Vinylphenol, p-Isopropenylphenol, mit DCPD (Dicyclopentadien) und/oder Styrol und/oder Kolophonium umgesetzte phenolische Körper. Ferner können mehrkernige Phenole, wie z.B. Dihydroxydiphenyl oder Isomere des Diphenylolmethans (Bisphenol F), Diphenyloläthans und Diphenylolpropans (Bisphenol A) eingesetzt werden. Mehrwertige einkernige Phenole, wie z.B. Resorcin, Brenzkatechin und Hydrochinon sind ebenfalls verwendbar.

Als Oxoverbindungen A kommen prinzipiell alle Aldehyde und/oder Ketogruppen enthaltenden oder solche Gruppen hervorbringenden Verbindungen in Frage, die gegenüber Phenolen, welche am aromatischen Ring aktive Wasserstoffatome besitzen, reaktiv sind und mit diesen Kondensationsprodukte bilden können. Von den als Ausgangskomponenten verwendbaren Oxoverbindungen, die einzeln oder zu mehreren nacheinander oder im Gemisch eingesetzt werden können, werden bevorzugt aliphatische Aldehyde, wie Formaldehyd, Acetaldehyd und deren Homologe bzw. Isomere mit bis zu 18 C-Atomen pro Molekül, insbesondere bis zu 12 C-Atomen pro Molekül eingesetzt. Besonders bevorzugt ist die Verwendung von wäßrigen Formaldehydlösungen. Es können auch Ketone mit bis zu 18, vorzugsweise bis zu 12, C-Atomen verwendet werden. Bevorzugt sind z.B. Aceton, Methyläthylketon, Diäthylketon und Kampfer.

Die ungesättigten terpenartigen Naturstoffe C sind insbesondere Harzsäuren und deren natürlich vorkommende Gemische, wie Abietinsäure, Neoabietinsäure, Lävopimarsäure, Pimarsäure, Isopimarsäure, Palustrinsäure sowie deren hydrierte und dehydrierte Formen. Die natürliche Gemische dieser Säuren, deren Zusammensetzung je nach Herkunft stark schwanken kann, nennt man Kolophonium. Es fällt als Destillationsrückstand bei der Gewinnung von Terpentinöl (Balsamharz), als Destillationsrückstand bei der Gewinnung von Tallöl (Tallharz) oder als Extrakt von Wurzelstöcken von Nadelbäumen (Koniferen-Wurzelharz) an. Die natürlichen Kolophonium-Qualitäten enthalten weiter Beimengungen von Fettsäureestern, Terpenalkoholen und Kohlenwasserstoffen.

Die Novolake können unter Verwendung von sauren Katalysatoren sowohl nach dem konventionellen Verfahren d.h. unter Rückfluß bei 95 bis 102 °C als auch nach dem sogenannten Umlaufverfahren (US-A 5,089,589) hergestellt werden. Als saure Katalysatoren werden bevorzugt starke Mineralsäuren und/oder ihre sauren Derivate, insbesondere Schwefelsäure, Hydrogensulfate oder Halbester der Schwefelsäure, oder organische Säuren, insbesondere Oxalsäure-Dihydrat und p-ToluoLsulfonsäure, verwendet.

Die Zusammensetzung der erfindungsgemäß als Kautschukkomponente verwendeten plastifizierten Novolake ist in einem breiten Bereich variierbar. Vorzugsweise beträgt das Stoffinengenverhältnis ihrer Bestandteile Phenol und Aldehyd von 1 : 0,4 bis 1:1, insbesondere 1 : 0,5 bis 1 : 0,9. Besonders bevorzugte Bestandteile sind dabei Phenol selbst und Formaldehyd.

Das Stoffmengenverhältnis zwischen Phenol und den ungesättigten terpenartigen Naturstoffen, insbesondere Kolophonium, liegt bei 1 : 6 bis 6 : 1, insbesondere 5 : 1 bis 1 : 1.

Zur weiteren Charakterisierung der verwendbaren plastifizierten Novolakharze **ABC** können z.B. der Schmelzpunkt und die Viskosität ihrer Lösungen in einem geeigneten organischen Lösemittel herangezogen werden, wobei diese Werte in den bei Novolaken üblichen Bereichen liegen

Schmelzpunkt (Kapillare, nach DIN 53181): ca. 100 °C (60 bis120 °C)
Dynamische Viskosität (DIN 53177/23 °C); 50 %ig in Methoxypropanol : 350 bis 1100 mPa·s

Vorzugsweise werden solche Harze **ABC** verwendet, die unter Normalbedingungen in fester, kleinteiliger Form vorliegen. Dabei sollte der Schmelzpunkt zumindest so hoch liegen, daß die Produkte beim Lagern bei Raumtemperatur und beim Transport nicht verklumpen können. Bevorzugt ist dabei einen Schmelztemperatur des Novolaks-von über 90 °C.

Die erfindungsgemäß verwendeten plastifizierten Phenolharze **ABC** können in den unterschiedlichsten vulkanisierbaren Kautschukmischungen eingesetzt werden.

Als geeignete, mit Schwefel vulkanisierbare Kautschuktypen können z.B. vorzugsweise Naturkautschuk (NR), Polyisopren (IR), Polybutadien (BR), Styrolbutadienkautschuk (SBR), Acrylnitrilkautschuk (ACM und ANM), Butylkautschuk (IIR), Chlorbutylkautschuk, Äthylen-Propylen-Dien-Terpolymer-kautschuk (EPDM) oder deren Gemische, wie man sie üblicherweise in der Fahrzeugreifenindustrie oder zur Herstellung technischer Gummiwaren einsetzt, verwendet werden. Die weiteren üblichen Bestandteile können beispielsweise Füllstoffe, wie Ruße, Kieselsäuren, Kreide, Kaoline sowie Pigmente anorganischer oder organischer Natur, wie Titandioxid, Eisenoxid und Phthalocyaninfarbstoffe, sein. Weitere übliche Bestandteile sind z.B. Vulkanisationsmittel aus der Gruppe Schwefel und schwefelspendende Verbindungen sowie Vulkanisationhilfsmittel, wie z.B. Beschleuniger und Aktivatoren. Ebenfalls üblich ist die Verwendung von Zusatzstoffen, beispielsweise aus der Gruppe Stearinsäure, Zinkoxid, Alterungsschutzmittel, die Klebrigkeit erhöhende Harze, wie auch Metallverbindungen zur zusätzlichen Verbesserung der Gurnmihaftung an Stahlcord, beispielsweise von Salzen des Kobalts oder Nickels einwertiger Carbonsäuren, vorzugsweise Naphthensäuren oder Isooctansäure. Zur Verbesserung der Verarbeitbarkeit sind ferner Zusätze von Mineralölen und Weichmachern, wie z.B. Phthalsäureestern, üblich.

In bevorzugter Weise enthalten die Mischungen von Kautschuk und Modifizierharz **ABC** zusätzlich Härtungsmittel **D**. Die Härtung der erfindungsgemäß verwendeten modifizierten Novolak-Harze **ABC** erfolgt dabei durch Abspaltung von Formaldehyd aus den Härtungsmitteln **D** bei erhöhter Temperatur während der Vulkanisation der Mischungen von Kautschuk und Modifizierharz. Geeignet als Härter sind z.B. Hexamethylentetramin und sogenannte Methylenspender in Form von Triazinharzen, insbesondere Melamin-Formaldehyd-Harze geeigneter Zusammensetzung. Die Melaminharze können dabei in Substanz als kristalline oder flüssige Produkte oder, bevorzugt, als vorteilhafte verarbeitbare, rieselfähige Produkte nach ihrer vorherigen Adsorption auf geeigneten festen Trägermaterialien wie fein verteilten Kieselsäuren eingesetzt werden.

Die modifizierten Phenolharze **ABC** werden in erfindungsgemäßer Weise in vulkanisationsfähigen Kautschukmischungen eingesetzt, die in üblicher Weise, z.B. in (heizbaren) Innenmischern oder auf (heizbaren) Mischwalzen, hergestellt werden können. Dabei kann es vorteilhaft sein, zur besseren Verteilung der Harze die Mischungstemperatur während einer beliebigen Mischungsphase auf einen Wert über dem Schmelzbereich des zugegebenen Harzes zu erhöhen. Es ist ferner wichtig, daß die Härtungsmittel zur Vermeidung einer vorzeitigen Reaktion mit den vemetzbaren Harzkomponenten möglichst erst am Ende des Mischvorganges bei nicht zu hohen Temperaturen (80 bis 100 °C) eingearbeitet werden.

Eine bevorzugte Verfahrensweise besteht darin, in zwei Mischungsstufen zu arbeiten. In der ersten Mischungsstufe werden der Kautschuk bzw. die verschiedenen Kautschuk-Typen mit den in der Kautschuktechnologie üblichen Zusätzen wie Ruß, Oxidationsschutzmittel, ZnO, Preßöl, Kieselsäure und das Modifizierharz **ABC** bei Temperaturen bis ca. 160 °C gemischt (bevorzugt in einem Innenmischer). Anschließend wird diese Mischung in einem zweiten Mischungsschritt bei Temperaturen von 80 bis 100 °C mit den Vulkanisationshilfsmitteln z.B. Vulkanisationsbeschteunigem und Schwefel sowie den Härtern **D** gemischt.

Im übrigen kann die Kornponentenauswahl und die Festlegung ihrer Massenanteile in den vulkanisierbaren Kautschukmischungen nach bekannten Kriterien erfolgen. Die Vermischung der Komponenten bei höheren Temperaturen kann ebenfalls in bekannter Weise, z.B. bei 100 bis 160 °C erfolgen. Ebenso kann auch die Vulkanisation der Kautschukmischungen in bekannter Weise bei üblichen Temperaturen in üblich heizbaren Vorrichtungen, gegebenenfalls unter Druck, erfolgen.

Das Verhältnis der Masse der plastifizierten Novolake **ABC** zu der der vulkanisierbaren Kautschukmischungen kann vorzugsweise bis zu 20 %, insbesondere bis zu 15 %, besonders bevorzugt 0,5 bis 10 %, bezogen auf die Masse der vulkanisierbaren Kautschukmischung (= 100 %), betragen. Auch die Mitverwendung anderer bekannter Phenolharze (Verstärker- bzw. Vulkanisationsharze) wie z.B. Alnovol® PN 320 bzw. 160 ist, soweit sie keine nachteiligen bzw. schädlichen Wirkungen verursachen bzw. entfalten, im allgemeinen möglich.

Die erfindungsgemäß modifizierten vulkanisierbaren Kautschukmischungen, die nach bekannten Methoden hergestellt, verarbeitet und vulkanisiert werden können, eignen sich sehr gut zur Herstellung von technischen Gummiartikeln, vorzugsweise von solchen, die hohen mechanischen Belastungen ausgesetzt sind. Sie können insbesondere zur Herstellung von Schläuchen, Treibriemen, wie Keilriemen, Transmissionsriemen und Zahnriemen, durch Festigkeitsträger verstärkten Dichtungen, Förderbändern und Fahrzeugreifen z.B. für PKW, LKW, Erdbewegungsmaschinen, Traktoren und Flugzeuge verwendet werden, da sie hervorragende Reißdehnungen und Weiterreißwiderstände bei gleichzeitig niedrigem Druckverformungsrest aufweisen. Sie eignen sich ebenfalls zur Herstellung von Gummierungen auf festen Körpem zum Schutz gegen mechanische Beschädigungen oder Korrosion.

Die Erfindung wird durch die nachstehenden Beispiele näher erläutert.

### Beispiele

In den nachfolgenden Beispielen bedeuten ebenso wie im vorhergehenden Text alle Angaben mit der Einheit "%", die sich auf Mischphasen beziehen, Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiel 1

### Herstellung eines plastifizierten Novolaks

Für die Kondensationsreaktion und die Aufarbeitung des Reaktionsgemisches wurde ein 2 Liter-Vierhals-Glaskolben verwendet, der mit thermostatischer Heizung, Rührvorrichtung, Thermometer, Zulaufvorrichtung sowie Rückflußkühler mit Wasserabscheider versehen ist. Der Wasserabscheider besaß einen höhenverstellbaren Siphon, der eine kontinuierliche Abtrennung des Wassers ermöglichte.

In den Reaktor wurden 640 g Phenol, 511 g Kolophonium, 146 g Xylol sowie 6 g Para-Toluolsulfonsäure gegeben und die Mischung auf 130 °C erhitzt. Nach Erreichen dieser Temperatur wurden 500 g einer 37 %igen wäßrigen Formaldehyd-Lösung aus einem Dosiergefäß innerhalb von 4,5 Stunden zugetropft. Während des Zulaufs erhöhte sich die Temperatur der Mischung auf 150 °C. Nach fünfstüncligem Erhitzen am Rückfluß hatten sich im Wasserabscheider 440 g einer wäßrigen Phase abgeschieden, die weniger als 1 % Formaldehyd enthielt.

Dem Ansatz wurden sodann 6 g Triäthanolamin zugegeben und das Lösungsmittel am absteigenden Kühler, zunächst unter Normaldruck, abdestilliert, bis eine Sumpftemperatur von 200 °C erreicht war. Während dieses Vorgangs wurde der Kolben mit Stickstoff als Schutzgas gespült. Nach Erreichen von 200 °C wurde unter vermindertem Druck während 30 min eine Wasserdampfdestillation zur Entfernung des nicht abreagierten Phenols durchgefährt. Anschließend wurde weitere 30 min bei 200 °C unter vermindertem Druck (30 hPa = 30 mbar) destilliert. Danach wurde der Destillationsrückstand abgekühlt und man erhielt 1100 g eines hellgelben Harzes, weiches einen Schmelzpunkt von 110 °C und als 50 %ige Lösung in Methoxypropanol bei 23 °C eine Viskosität von 630 mPa·s aufwies. Der Gehalt des Harzes an freiem Phenol betrug weniger als 1 %.

### Beispiel 2

In einen Reaktor wie in Beispiel 1 wurden 640 g Phenol, 1020 g Kolophonium, 146 g Xylol sowie 8 g Para-Toluolsulfonsäure gegeben und die Mischung auf 130 °C erhitzt. Nach Erreichen dieser Temperatur wurden 500 g einer 37 %igen wäßrigen Formaldehyd-Lösung aus einem Dosiergefäß innerhalb von 4,5 Stunden zugetropft. Während des Zulaufs erhöhte sich die Temperatur der Mischung auf 150 °C. Nach fünfstündigem Erhitzen am Rückfluß hatten sich im Wasserabscheider 440 g einer wäßrigen Phase abgeschieden, die weniger als 1 % Formaldehyd enthielt.

Dem Ansatz wurden sodann 8 g Triäthanolamin zugegeben und das Lösungsmittel am absteigenden Kühler, zunächst unter Normaldruck, abdestilliert, bis eine Sumpftemperatur von 200 °C erreicht war. Während dieses Vorgangs wurde der Kolben mit Stickstoff als Schutzgas gespült. Nach Erreichen von 200 °C wurde unter vermindertem Druck während 30 min eine Wasserdampfdestillation zur Entfernung des nicht abreagierten Phenols durchgeführt. Anschließend wurde weitere 30 min bei 200 °C unter vermindertem Druck (30 hPa = 30 mbar) destilliert. Danach wurde der Destillationsrückstand abgekühlt und man erhielt 1600 g eines hellgelben Harzes, welches einen Schmelzpunkt von 98 °C und als 50 %ige Lösung in Methoxypropanol bei 23 °C eine Viskosität von 460 mPa·s aufwies. Der Gehalt des Harzes an freiem Phenol betrug weniger als 1 %.

### Prüfrezepturen:

Tabelle 1 zeigt die Zusammensetzungen (Massen in g) der nach Ausvulkanisation zu untersuchenden Kautschukmischungen. Jeweils zu 100 g Kautschuk wurden die in der Tabelle 1 angeführten Zusatzstoffe (Massen in g) gemischt. Diese Mischungen wurden dann mit den Phenolharzen gemäß den Angaben in der Tabelle 2 gemischt.

**Tabelle 1: Grundmischung (Massen der Komponenten in g)**

| Prüfrezeptur | Härtung mit HMT (Kautschukmischungen 2-) | Härtung mit HMMM (Kautschukmischungen 3-) |
|---|---|---|
| Naturkautschuk | 100 | 100 |
| Ruß (N 326) | 70 | 70 |
| Stearinsäure | 1,5 | 1,5 |
| Zinkoxid | 5 | 5 |
| Alterungsschutzmittel | 2 | 2 |
| Schwefel | 2,5 | 2,5 |
| ®Vulkacit CZ (CBS) | 1,2 | 1,2 |
| Härter: HMT | 1,0 | |
| Härter: HMMM (®Resimene XT 911) | | 3,0 |

| | | |
|---|---|---|
| HMT: Hexamethylentetramin | | |
| HMMM: Hexamethoxymethylmelamin | | |

**Tabelle 2: Kautschukmischungen 2-0 bis 2-4, gehärtet mit HMT (Hexamethylentetramin)**

| Variabler Bestandteil in g | | 2-0 | 2-1 | 2-2 | 2-3 | 2-4 |
|---|---|---|---|---|---|---|
| ®Alnovol PN 160 | | | 9 | | | |
| ®Alnovol PN 320 | | | | 9 | | |
| Harz aus Beispiel 1 | | | | | 9 | |
| Harz aus Beispiel 2 | | | | | | 9 |
| HMT | | | 1 | 1 | 1 | 1 |
| Vulkanisation (145°C) | min | 20 | 45 | 45 | 45 | 45 |
| Mechanische Eigenschaften: | | | | | | |
| Mooney L 1 +4/120 °C | | 39 | 40 | 49 | 41 | 37 |
| Reißfestigkeit | MPa | 25 | 16 | 12 | 17 | 16 |
| Reißdehnung | % | 289 | 207 | 165 | 270 | 223 |
| Spannungswert bei 10 % Dehnung | MPa | 1,0 | 2,8 | 2,7 | 1,9 | 1,5 |
| Spannungswert bei 50 % Dehnung | MPa | 2,7 | 4,4 | 4,3 | 3,1 | 2,9 |
| Spannungswert bei 100 % Dehnung | MPa | 6,0 | 7,3 | 7,0 | 5,4 | 5,9 |
| Härte Shore A (23 °C) | | 74 | 92 | 90 | 87 | 84 |
| Härte Shore A (70 °C) | | 72 | 89 | 88 | 85 | 82 |
| Weiterreißwiderstand | N/mm | 36 | 41 | 27 | 64 | 57 |
| Druckverformungsrest (100 °C / 24 h) | % | 47 | 64 | 61 | 54 | 49 |

Wie aus der Tabelle 2 zu erkennen ist, nehmen im Vergleich zu den Standardmischungen 2-1 und 2-2 bei Verwendung der plastifizierten Novolake (Harze aus Beispielen 1 und 2, Mischungen 2-3 und 2-4) die Weiterreißwiderstände und die Reißdehnungen drastisch zu, die Druckverformungsreste (100°C/24 h) ab, während die Reißfestigkeit praktisch unbeeinflußtbleibt. Dies ist der Effekt der erfindungsgemäßen Verwendung. Die Spannungs- und Härtewerte nehmen als Folge davon dementsprechend ab. Im Vergleich mit der Nullmischung (2-0) nimmt die Reißfestigkeit ab, die Shore-Härte und der Druckverformungsrest zu, und der Weiterreißwiderstand wird erheblich verbessert.

Die Harze ®Alnovol PN 160 und PN 320 (Solutia Germany GmbH & Co. KG) sind unplastifizierte Standard-Novolake auf Basis Phenol/Alkylphenol/Formaldehyd.
®Resimene XT 911 (Solutia Germany GmbH & Co. KG) ist ein Hexamethoxymethylcnelamin in flüssiger Form.

**Tabelle 3: Kautschukmischungen 3-0 bis 3-4, gehärtet mit HMMM (Hexamethoxymethylmelamin)**

| Variabler Bestandteil in g | | 3-0 | 3-1 | 3-2 | 3-3 | 3-4 |
|---|---|---|---|---|---|---|
| ®Alnovol PN 160 | | | 7 | | | |
| ®Alnovol PN 320 | | | | 7 | | |
| Harz aus Beispiel 1 | | | | | 7 | |
| Harz aus Beispiel 2 | | | | | | 7 |
| HMMM | | | 3 | 3 | 3 | 3 |
| Vulkanisation (145 °C) | min | 20 | 60 | 60 | 45 | 45 |
| Mechanische Eigenschaften: | | | | | | |
| Mooney L 1+4/120 °C | | 39 | 31 | 33 | 28 | 28 |
| Reißfestigkeit | MPa | 25 | 16 | 15 | 20 | 20 |
| Reißdehnung | % | 289 | 244 | 235 | 333 | 308 |
| Spannungswert bei 10 % Dehnung | MPa | 1,0 | 3,5 | 3,4 | 2,0 | 1,7 |
| Spannungswert bei 50 % Dehnung | MPa | 2,7 | 4,6 | 4,6 | 3,2 | 3,1 |
| Spannungswert bei 100 % Dehnung | MPa | 6,0 | 6,7 | 6,7 | 5,2 | 5,8 |
| Härte Shore A (23 °C) | | 74 | 94 | 92 | 87 | 84 |
| Härte Shore A (70 °C) | | 72 | 92 | 90 | 85 | 82 |
| Weiterreißwiderstand | N/mm | 36 | 31 | 32 | 68 | 70 |
| Druckverformungsrest (100 °C / 24 h) | % | 47 | 76 | 71 | 60 | 60 |

Aus der Tabelle 3 ist ersichtlich, daß unter Verwendung des Härters HMMM der sich bei den Mischungen 2-0 bis 2-4 (Tabelle 2) ergebende Effekt verstärkt. Das heißt, auch im Falle einer Härtung mit HMMM ergibt sich gegenüber einer Verstärkung mit Phenolharzen gemäß dem Stand der Technik (Mischungen 3-1, 3-2) bzw. der Nullmischung (3-0) eine deutliche Verbesserung der Reißdehnung und des Weiterreißwiderstands unter gleichzeitiger Reduzierung des Drockverformungsrestes.

## Patentansprüche

1. Verwendung von mit terpenartigen olefinisch ungesättigten Naturstoffen **C** plastifizierten Novolaken **ABC** als Modifizierharz für Kautschukmischungen zur Erhöhung der Weiterreißfestigkeit und zur Verminderung des Druckverfonnungsrestes von daraus hergestellten Vulkanisaten, wobei das Verhältnis der Stoffmenge des Phenols bzw. Phenolderivats **B** und der Stoffmenge des Naturstoffs **C** in dem modifizierten Novolak zwischen 1:6 bis 6:1 beträgt.

2. Verwendung nach Anspruch 1, **dadurch gekennzeichnet, daß** die Novolake Bausteine von Phenolen **B** enthalten, ausgewählt aus Phenol, den verschiedenen Kresol- und Xylenol-Isomeren, den Isomeren des Äthylphenols, des Propyl- bzw. Isopropylphenols, o- und p-Vinylphenol, p-Isopropenylphenol, Dihydroxydiphenyl, den Isomeren des Diphenylolmethans (Bisphenol F), Diphenyloläthans und Diphenylolpropans (Bisphenol A), Resorcin, Brenzkatechin und Hydrochinon.

3. Verwendung nach Anspruch 1, **dadurch gekennzeichnet, daß** die Novolake Bausteine enthalten, die von Oxoverbindungen **A** abgeleitet sind, ausgewählt aus Formaldehyd und anderen aliphatischen Aldehyden und Ketonen mit bis zu 18 Kohlenstoffatomen.

4. Verwendung nach Anspruch 1, **dadurch gekennzeichnet, daß** die terpenartigen ungesättigten Naturstoffe **C** mindestens eine Harzsäure enthalten, ausgewählt aus Abietinsäure, Neoabietinsäure, Lävopimarsäure, Pimarsäure, Isopimarsäure, Palustrinsäure sowie deren hydrierten und dehydrierten Formen.

5. Verwendung nach Anspruch 1, **dadurch gekennzeichnet, daß** das Modifizierharz **ABC** zu einem Kautschuk zugefügt wird, ausgewählt aus Naturkautschuk, Polyisopren, Polybutadien, Styrolbutadienkautschuk, Acrylnitrilkautschuk, Butylkautschuk, Chlorbutylkautschuk, Äthylen-Propylen-Terpolymer-Kautschuk und deren Mischungen.

6. Verwendung nach Anspruch 5, **dadurch gekennzeichnet, daß** das Massenverhältnis von Modifizierharz **ABC** zu Kautschuk 0,5 g /100 g bis 20 g/100 g beträgt.

7. Verwendung nach Anspruch 5, **dadurch gekennzeichnet, daß** die Mischung aus Kautschuk und Modifizierharz **ABC** weitere Zusatzstoffe und/oder Hilfsstoffe enthält, ausgewählt aus Ruß, Schwefel, Kieselsäure, Kreide, Stearinsäure, Zinkoxid, Vulkanisationsbeschleunigern und Aktivatoren.

8. Verwendung nach Anspruch 1, **dadurch gekennzeichnet, daß** zusätzlich ein Härter **D** eingesetzt wird, der unter den Vulkanisationsbedingungen Formaldehyd abspaltet.

9. Verfahren zur Herstellung von Gummiwalzen, **dadurch gekennzeichnet, daß** einer Kautschukmischung ein Modifizierharz zugesetzt wird, das einen mit ungesättigten terpenartigen Naturstoffen modifizierten Novolak **ABC** enthält, und daß die so hergestellte Mischung anschließend in die gewünschte Form gebracht und vulkanisiert wird.

## Revendications

1. Utilisation de Novolaques ABC plastifiées avec des substances naturelles oléfiniquement insaturées terpéniques C, à titre de résine modifiée pour des mélanges de caoutchouc, pour augmenter la résistance à la propagation du déchirement et pour diminuer l'écart permanent des vulcanisats préparés à partir de ceux-ci, où le rapport de la quantité de matière de phénol ou dérivé de phénol B à la quantité de matières de substance naturelle C dans la Novolaque modifiée est entre 1:6 et 6:1.

2. Utilisation selon la revendication 1, **caractérisée en ce que** les Novolaques contiennent des éléments de phénol B, choisis parmi le phénol, les différents isomères du crésol et du xylénol, les isomères de l'éthylphénol, du propyl- ou de l'isopropyl-phénol, le o- et le p-vinylphénol, le p-isopropénylphénol, le dihydroxydiphényle, les isomères du diphénylolméthane (bisphénol F), du diphényloléthane et du diphénylolpropane (bisphénol A), le résorcinol, le catéchol et l'hydroquinone.

3. Utilisation selon la revendication 1, **caractérisée en ce que** les Novolaques contiennent des éléments qui dérivent de composés oxo A, choisis parmi le formaldéhyde et d'autres aldéhydes et cétones aliphatiques, ayant jusqu'à 18 atomes de carbone.

4. Utilisation selon la revendication 1, **caractérisée en ce que** les substances naturelles insaturées terpéniques C contiennent un acide résinique, choisi parmi l'acide abiétique, l'acide néoabiétique, l'acide lévopimarique, l'acide pimarique, l'acide isopimarique, l'acide palustrique, ainsi que leurs formes hydrogénées et déshydratées.

5. Utilisation selon la revendication 1, **caractérisée en ce que** la résine modifiée ABC est ajoutée à un caoutchouc, choisi parmi le caoutchouc naturel, le polyisoprène, le polybutadiène, le caoutchouc styrène-butadiène, le caoutchouc acrylonitrile, le caoutchouc butyle, le caoutchouc chlorobutyle, le caoutchouc terpolymère éthylène-propylène et leurs mélanges.

6. Utilisation selon la revendication 5, **caractérisée en ce que** le rapport massique de la résine modifiée ABC au caoutchouc est entre 0,5 g/100 g et 20 g/100 g.

7. Utilisation selon la revendication 5, **caractérisée en ce que** le mélange de caoutchouc et de résine modifiée ABC contient d'autres additifs et/ou auxiliaires, choisis parmi la suie, le soufre, l'acide silicique, la craie, l'acide stéarique, l'oxyde de zinc, des accélérateurs de la vulcanisation et des activateurs.

8. Utilisation selon la revendication 1, **caractérisée en ce que** l'on introduit en outre un durcisseur D qui clive le formaldéhyde dans les conditions de vulcanisation.

9. Procédé de préparation de cylindres en caoutchouc, **caractérisé en ce que** l'on ajoute une résine modifiée à un mélange de caoutchouc, où la résine modifiée contient une Novolaque ABC, modifiée par des substances naturelles insaturées terpéniques et où le mélange ainsi préparé est ensuite converti en la forme désirée, et vulcanisé.

## Claims

1. The use, as modifier resin for rubber mixtures to increase their propagation resistance and to reduce compression set of vulcanizates prepared therefrom, of novolaks **ABC** plastified with terpene-type olefinically unsaturated natural substances **C**, where the ratio between the molar amount of the phenol or phenol derivative **B** and the molar amount of the natural substance **C** in the modified novolak is from 1:6 to 6:1.

2. The use as claimed in claim 1, wherein the novolaks contain units of phenols **B** selected from the group consisting of phenol, the various cresol isomers and xylenol isomers, the ethylphenol isomers, the propyl- and isopropylphenol isomers, o- and p-vinylphenol, p-isopropenylphenol, dihydroxybiphenyl, the diphenylolmethane (bisphenol F) isomers, the diphenylolethane and diphenylolpropane (bisphenol A) isomers, resorcinol, pyrocatechol, and hydroquinone.

3. The use as claimed in claim 1, wherein the novolaks contain units derived from oxo compounds **A** selected from the group consisting of formaldehyde and other aliphatic aldehydes and ketones having up to 18 carbon atoms..

4. The use as claimed in claim 1, wherein the terpene-like unsaturated natural substances **C** comprise at least one resin acid selected from the group consisting of abietic acid, neoabietic acid, levopimaric acid, pimaric acid, isopimaric acid, palustric acid, and the hydrogenated and dehydrogenated forms of these.

5. The use as claimed in claim 1, wherein the modifier resin **ABC** is added to a rubber selected from the group consisting of natural rubber, polyisoprene, polybutadiene, styrene-butadiene rubber, acrylonitrile rubber, butyl rubber, chlorobutyl rubber, ethylenepropylene-terpolymer rubber, and mixtures of these.

6. The use as claimed in claim 5, wherein the ratio by weight of modifier resin **ABC** to rubber is from 0.5 g/100 g to 20 g/100 g.

7. The use as claimed in claim 5, wherein the mixture made from rubber and modifier resin **ABC** comprises other additives and/or auxiliaries selected from the group consisting of carbon black, sulfur, silica, chalk, stearic acid, zinc oxide, vulcanization accelerators, and activators.

8. The use as claimed in claim 1, wherein use is also made of a curing agent **D** which eliminates formaldehyde under the vulcanization conditions.

9. A process for producing a rubber roll, which comprises adding, to a rubber mixture, a modifier resin which comprises a novolak **ABC** modified with unsaturated terpene-like natural substances, and then converting the resultant mixture to the desired shape, and vulcanizing the same.
